# EUROPEAN PATENT SPECIFICATION

(11) **EP 0 470 835 B1**
(45) Date of publication and mention of the grant of the patent: **11.10.1995**
(21) Application number: 91307274.0
(22) Date of filing: 08.08.1991
(51) Int. Cl.: B60C 9/20

(54) **Pneumatic radial tires**
Radialer Luftreifen
Bandage pneumatique radial

(30) Priority: 10.08.1990 JP 210201/90
(43) Date of publication of application: 12.02.1992
(73) Proprietor: Bridgestone Corporation, Tokyo 104 (JP)
(72) Inventor: Miyazono, Toshiya, Kodaira City, Tokyo (JP); Kohno, Yoshihide, Kodaira City, Tokyo (JP); Koseki, Hiroyuki, Kodaira City, Tokyo (JP)
(74) Representative: Whalley, Kevin

(56) References cited:
- FR-A- 1 328 156
- FR-A- 2 312 383
- FR-A- 2 398 625
- GB-A- 2 015 937

## Description

This invention relates to pneumatic radial tires having improved belt durability or bead portion durability by improving reinforcing elements used for the reinforcement of the belt or bead portion.

A radial tire according to the preamble of claims 1 and 5 is disclosed in FR-A-1 328 156.

In the belt of the radial tire, there is generally used a rubberized layer in which a plurality of reinforcing elements such as steel cords or steel monofilaments are arranged in parallel with each other so as to incline with respect to an equatorial plane of the tire and embedded at an equal interval in a coating rubber.

Such a rubberized layer is also used as a reinforcing layer for a bead portion. In this case, at least one rubberized layer is extended along a turnup portion of at least one carcass ply wound around a bead core from the inside of the tire toward the outside thereof.

In the conventional belt structure that the reinforcing elements are arranged in parallel to each other at an equal interval, rubber facing to the cut ends of the reinforcing elements at the widthwise belt end are pecked by these reinforcing elements whenever the tire is deformed during the contacting with the ground irrespectively of whether the adjoining reinforcing elements are contacted with each other along their full lengths, so that fine cracking is first caused in the rubber and then grows between the mutually adjoining reinforcing elements and finally rapidly enlarges toward between the mutually adjoining laminated belt layers. That is, the rate of progressing of the cracking until the occurrence of belt separation failure is considerably fast, which determines the durability of the tire.

The occurrence and growth of such cracking are also caused even in the bead portion reinforcing layer using the above rubberized layer. That is, rubber facing to the cut ends of the reinforcing elements are pecked by these reinforcing elements at the radially outward region of the bead portion reinforcing layer (only an outward end of the reinforcing layer when an inward end of the reinforcing layer is terminated in the vicinity of a bead heel, or both outward and inward ends when the inward end is wound around a bead core from the outside toward the inside and terminated) whenever deformation occurs during the running of the tire, whereby fine cracking is caused. Such cracking grows during running for a long time (particularly in case of recapping the tread portion) because the distance between the mutual reinforcing elements in the bead portion reinforcing layer is narrow, and easily links between the adjoining reinforcing elements. Thereafter, the cracking progresses from the bead portion reinforcing layer toward the inside or outside of the tire or into the carcass ply or the adjoining bead portion reinforcing layer to rapidly grow into a large crack.

Since it is difficult to prevent the occurrence of the above fine cracking, it becomes important to control the growth of the cracking once created. For this purpose, it is considered to widen the distance between the mutually adjoining reinforcing elements. Recently, the diameter of the reinforcing element has become finer in accordance with the strong demand for reducing the tire weight and simplifying the reinforcing element, so that if it is intended to maintain the tensile rigidity of the belt or the bead portion reinforcing layer at the usual value, it is necessary to increase the number of the reinforcing elements embedded in rubber and consequently the distance between the adjoining reinforcing elements becomes inversely narrower, which conflicts with the control of cracking growth.

It is, therefore, an aim of the present invention to provide an effective and adequate solution against the degradation of durabilities of the belt and bead portion resulting from the growth and progress of fine cracking created at radially outward ends of the belt and bead portion reinforcing layer.

Attention is also drawn to the disclosure of FR-A-2398625.

According to a first aspect of the invention, there is provided a pneumatic radial tire having a belt comprised of a plurality of belt layers each composed of a rubberized layer containing reinforcing steel elements obliquely arranged in parallel with each other with respect to the equatorial plane of the tire as a reinforcement for a tread portion of the tire, characterized in that at least a greater part of these reinforcing steel elements included in each rubberized belt layer are divided into a plurality of groups each comprised of a plurality of reinforcing steel elements, and a distance between the groups or between the group and the reinforcing steel element adjacent to this group is wider than the distance between the adjoining reinforcing steel elements in the group.

According to a second aspect of the invention, there is provided a pneumatic radial tire having a carcass comprised of at least one rubberized cord ply containing radially arranged cords therein and wound around a bead core from the inside of the tire toward the outside thereof to form a turnup portion, and at least one rubberized layer extending at least along the turnup portion of the carcass and containing a plurality of reinforcing steel elements obliquely arranged in parallel with each other with respect to the cord direction of the carcass ply as a bead portion reinforcing layer, characterized in that at least a greater part of these reinforcing steel elements included in each bead portion reinforcing layer are divided into a plurality of groups each comprised of a plurality of reinforcing steel elements, and a distance between the groups or between the group and the reinforcing steel element adjacent to this group is wider than the distance between the adjoining reinforcing steel elements in the group.

In preferred embodiments of the invention, the number of the reinforcing steel elements is the same in the groups, or the number of the reinforcing steel elements is different in the groups; and at least a part of the reinforcing steel elements included in the group comes into contact with each other without restraint.

According to the invention, the reinforcing steel element used for the belt reinforcement or the bead portion reinforcing layer is a steel cord obtained by twisting a plurality of steel filaments, or a steel monofilament.

In the formation of the rubberized layer containing these reinforcing elements therein, the reinforcing elements are divided into groups every few elements, for example two elements, by means of a chasing roll and then embedded in a rubber sheet while widening the distance between the group and the reinforcing element adjacent to this group to form a treat. The chasing roll is provided at its outer periphery with a plurality of circumferential grooves guiding these reinforcing elements. In this case, the circumferential groove has a width set to a product of diameter of the reinforcing element and number of reinforcing elements constituting the group for dividing these reinforcing elements into a plurality of groups, and also an annular flange separating the adjoining circumferential grooves from each other is arranged between the circumferential grooves. The thus prepared treat is diagonally cut in accordance with an inclination angle of the reinforcing element with respect to the equatorial plane of the tire required at subsequent steps for the tire building, and thereafter the cut treats are joined at their widthwise opposed edges to form a rubber strip used for the tire building.

As previously mentioned, the rubber breakage at widthwise ends of the belt and bead portion reinforcing layer in the radial tire is induced through not only an initial stage that fine cracking is caused in rubber containing the reinforcing elements by repeatedly pecking the ends of the elements on the rubber upon deformation of the tire during the running thereof and progresses along the surfaces of the reinforcing elements but also the stage that the cracking begins to rapidly grow between the mutually adjoining reinforcing elements in case of the conventional technique that the reinforcing elements are arranged side by side at an equal interval. Particularly, when a plurality of the above rubberized layers are laminated to form the belt, the cracking rapidly grows between the laminated layers to undesirably cause belt separation. On the contrary, according to the invention, the distance between the groups or the distance between the group and the reinforcing steel element adjacent to this group is wider than the distance between the mutually adjoining reinforcing elements arranged at the equal interval in the conventional technique, so that the growth of the cracking during and after the initial stage is delayed in accordance with the distance between the groups or between the group and the adjacent reinforcing element, and hence the occurrence of separation due to the growth of the cracking is effectively controlled.

Even when all of the reinforcing elements are dispersed in the rubberized layer so as to approximately extend over the full circumference of the tire while dividing only a part of the reinforcing elements into groups, the distance between the group and the reinforcing element adjacent to this group is relatively wider than the distance between the mutually adjoining reinforcing elements arranged at the equal interval in the conventional technique, so that the above growth of the cracking can somewhat be controlled, but this effect is still insufficient. For this end, the division of the reinforcing elements into groups should be conducted over at least the greater part of the full circumference of the tire, whereby the above effect can be made satisfactory.

The reason why the number of the reinforcing elements in the group is limited to not more than few elements is due to the fact that as the number of the reinforcing elements becomes large, non-adhered portions at the ends of the reinforcing elements in the group increase to cause the progress of the cracking produced in the group though the distance between the groups can advantageously be widened. In order to effectively prevent the growth of the cracking in the group, it is preferable to limit the number of the reinforcing elements in the group to a range of 2-6.

The invention will be further described, by way of example only, with reference to the accompanying drawings, in which:
Fig. 1 is a schematic section view of a tire for a passenger car to be tested;
Figs. 2 to 7 are schematic views, partly shown in section, of rubberized layers showing an arrangement of reinforcing elements, respectively;
Figs. 8 and 9 are schematic section views of other embodiments of tires according to the invention; and
Figs. 10 and 11 are schematic views, partly shown in section, of rubberized layers showing an arrangement of reinforcing elements, as used in the tires of Figs. 8 and 9, respectively.

The following examples are given in illustration of the invention and are not intended as limitations thereof.

### Example 1

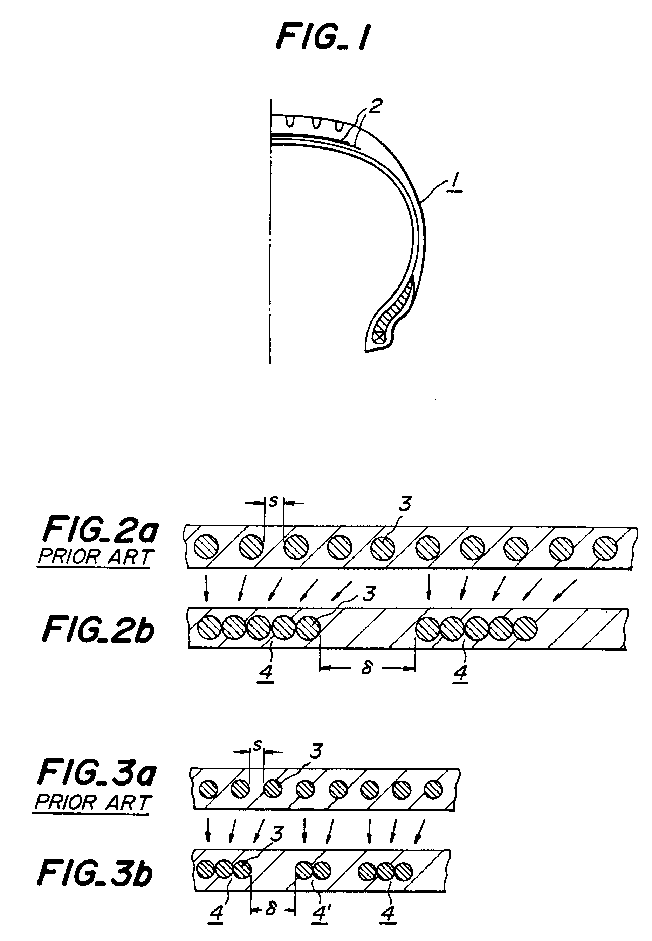

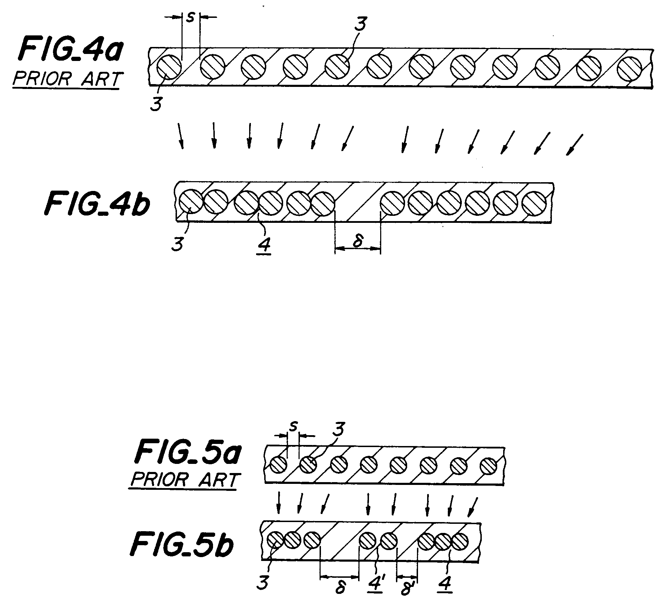

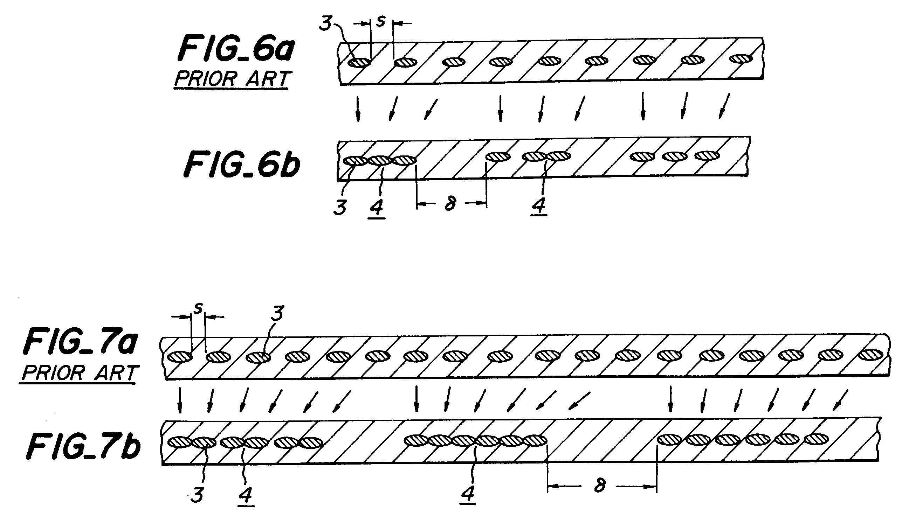

In a radial tire 1 for a passenger car having a tire size of 185/70 R14 and a structure shown in Fig. 1, a rubberized layer containing a plurality of reinforcing elements arranged at an equal interval in the conventional technique and a rubberized layer of reinforcing steel elements according to the invention as shown in Figs. 2 to 7 are used in a belt 2 for the reinforcement of a tread in the tire. In the illustrated rubberized layer, numeral 3 is a reinforcing steel element and numeral 4 a group comprised of the reinforcing steel elements. Moreover, all of Figs. 2a, 3a, 4a, 5a, 6a and 7a show the conventional rubberized layer in which the reinforcing elements 3 are arranged in parallel with each other at an equal interval s, while all of Figs. 2b, 3b, 4b, 5b, 6b and 7b show the rubberized layer according to the invention in which at least a greater part of the reinforcing steel elements 3 are divided into a plurality of groups 4 (4') each comprised of few reinforcing steel elements and arranged at a distance (δ, δ') between the groups or between the group and the reinforcing steel element adjacent to this group. Moreover, the reinforcing element 3 shown in Figs. 2 to 5 is a steel monofilament of circular shape in section, but may take any shape such as ellipsoid and the like. The reinforcing element 3 shown in Figs. 6 and 7 is a steel cord of ellipsoidal shape in section.

There were prepared six test tires 1 each comprising a belt 2 composed of two rubberized layers having the structure shown in Table 1. Each of these tires was run on a drum testing machine at a speed of 80 km/h under an internal pressure of 1.9 kgf/cm² and a load of 455 kg over a distance of 60,000 km. Thereafter, the tire was dissected to measure a crack length produced in the vicinity of the end of the belt 2. The measured results are also shown in Table 1. In these tires, all of the reinforcing steel elements were divided into given groups.

Moreover, Table 2 shows tires having conventional rubberized layers in comparison with those of the above test tires.

**Table 1**

| Kind of tire | Kind of reinforcing element (mm) | End count (elements/50 mm) | Distance δ between groups (mm) | Ratio of crack length * | Remarks |
|---|---|---|---|---|---|
| A | mono filament (0.3) | 92.2 | 0.96 | 0.56 | Fig.2b |
| B | mono filament (0.4) | 60.6 | 1.29 | 0.71 | Fig.3b |
| C | mono filament (0.3) | 92.2 | 0.96 | 0.59 | Fig.4b |
| D | mono filament (0.4) | 60.6 | 1.29 | 0.73 | Fig.5b |
| E | 1 × 5 × 0.23 | 41.0 | 4.02 | 0.68 | Fig.6b |
| F | 1 × 3 × 0.30 | 51.0 | 5.04 | 0.53 | Fig.7b |

| | | | | | |
|---|---|---|---|---|---|
| * Ratio of crack length: ratio of test tire according to the invention to respective conventional tire | | | | | |

**Table 2**

| Kind of tire | Kind of reinforcing element (mm) | End count (elements/50 mm) | Distance s between equally arranged reinforcing elements (mm) | Remarks |
|---|---|---|---|---|
| G | mono filament (0.3) | 92.2 | 0.24 | Fig.2a |
| H | mono filament (0.4) | 60.6 | 0.43 | Fig.3a |
| I | mono filament (0.3) | 92.2 | 0.24 | Fig.4a |
| J | mono filament (0.4) | 60.6 | 0.43 | Fig.5a |
| K | 1 × 5 × 0.23 | 41.0 | 1.34 | Fig.6a |
| L | 1 × 3 × 0.30 | 51.0 | 0.84 | Fig.7a |

In all of the above tires, the belt 2 is comprised of two laminated belt layers, the reinforcing elements of which layers are crossed with each other at an inclination angle of 24° with respect to the equatorial plane of the tire. Furthermore, the width of the belt layer located adjacent the tread portion is narrower than that of the belt layer located adjacent the carcass ply.

The cracking produced in the vicinity of the belt end occurs in only the belt layer located adjacent the tread portion. Therefore, the above measurement is made only in respect of the belt layer located adjacent the tread portion.

Under the above circumstance, it is naturally possible to apply the rubberized layer according to the invention only to the belt layer located adjacent the tread portion.

### Example 2

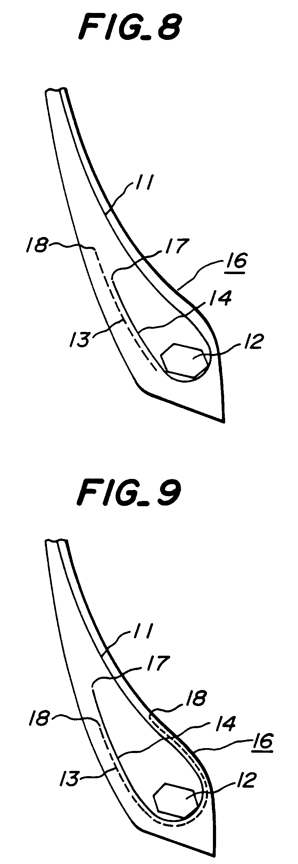

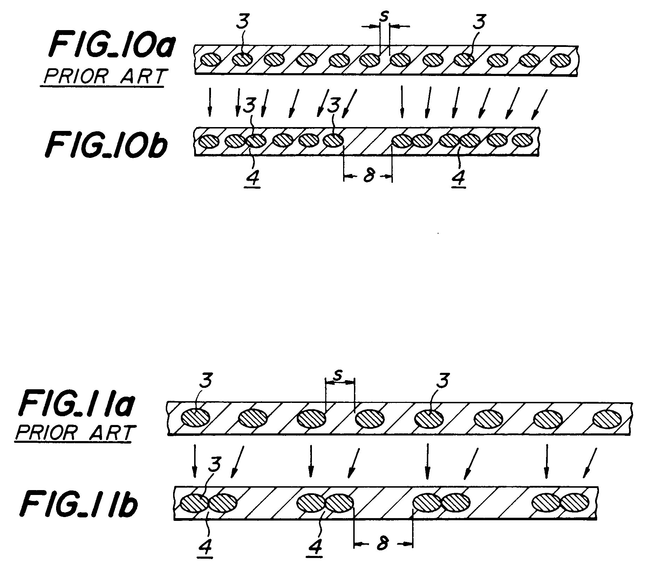

There are provided two test tires for truck and bus having a tire size of 11/70 R22.5 and a bead portion structure shown in Figs. 8 and 9. In Figs. 8 and 9, numeral 11 is a carcass ply, numeral 12 a bead core, numeral 13 a bead portion reinforcing layer, numeral 14 a turnup portion of the carcass ply, numeral 16 a bead portion, numeral 17 a turnup end of the carcass ply, and numeral 18 a free end of the bead portion reinforcing layer. A rubberized layer containing a plurality of reinforcing elements arranged at an equal interval in the conventional technique and a rubberized layer of reinforcing steel elements according to the invention as shown in Figs. 10 and 11 are used as the bead portion reinforcing layer 13 shown in Figs. 8 and 9, respectively.

Moreover, Figs. 10a and 11a show the conventional rubberized layer in which the reinforcing elements 3 are arranged in parallel with each other at an equal interval s, while Figs. 10b and 11b show the rubberized layer according to the invention in which all of the reinforcing steel elements 3 are divided into a plurality of groups 4 each comprised of few reinforcing steel elements and arranged at a distance (δ) between the groups.

Each of these tires using the reinforcing element as shown in Table 3 was run on a drum testing machine at a speed of 60 km/h under an internal pressure of 7.5 kgf/cm² and a load of 3000 kg over a distance of 60,000 km. Thereafter, the tire was dissected to measure a crack length produced in the vicinity of the radially outward end of the bead portion reinforcing layer 13. The measured results are also shown in Table 3. Moreover, Table 4 shows tires having conventional rubberized layers in comparison with those of the above test tires.

Moreover, the reinforcing element in the bead portion reinforcing layer is arranged at a certain inclination angle with respect to the cord angle in the turnup portion of the carcass ply. That is, the inclination angle in the tires M and O is 22° and that in the tires N and P is 30°.

**Table 3**

| Kind of tire | Kind of reinforcing element (mm) | End count (elements/50 mm) | Distance δ between groups (mm) | Ratio of crack length * | Remarks |
|---|---|---|---|---|---|
| M (Fig. 8) | mono filament (0.6) | 59.8 | 3.78 | 0.34 | Fig. 10b |
| N (Fig. 9) | 3+9+15×0.15 | 26.0 | 4.06 | 0.54 | Fig. 11b |

| | | | | | |
|---|---|---|---|---|---|
| * Ratio of crack length: ratio of test tire according to the invention to respective conventional tire | | | | | |

**Table 4**

| Kind of tire | Kind of reinforcing element (mm) | End count (elements/50 mm) | Distance s between equally arranged reinforcing elements (mm) | Remarks |
|---|---|---|---|---|
| O (Fig. 8) | mono filament (0.6) | 59.8 | 0.63 | Fig. 10a |
| P (Fig. 9) | 3+9+15×0.15 | 26.0 | 2.03 | Fig. 11a |

As mentioned above, according to the invention, the growth and progress of the cracking produced in the vicinity of ends of the reinforcing element steel elements, which is a cause of separation failure, can effectively be controlled in the belt or bead portion reinforcing layer of the pneumatic radial tire.

## Claims

1. A pneumatic radial tire (1) having a belt (2) comprised of a plurality of belt layers each composed of a rubberized layer containing reinforcing steel elements (3) obliquely arranged in parallel with each other with respect to the equatorial plane of the tire as a reinforcement for a tread portion of the tire, characterized in that at least a greater part of said reinforcing steel elements (3) included in each rubberized belt layer are divided into a plurality of groups (4,4') each comprised of a plurality of reinforcing steel elements, and a distance (δ,δ') between the groups or between the group and the reinforcing steel element adjacent to this group is wider than the distance between the adjoining reinforcing steel elements in the group.

2. A tire as claimed in claim 1, characterized in that the number of the reinforcing steel elements is the same in the groups.

3. A tire as claimed in claim 1, characterized in that the number of the reinforcing steel elements is different in the groups.

4. A tire as claimed in any of claims 1 to 3, characterized in that at least a part of the reinforcing steel elements included in the group comes into contact with each other without restraint.

5. A pneumatic radial tire (1) having a carcass comprised of at least one rubberized cord ply (11) containing radially arranged cords therein and wound around a bead core (12) from the inside of the tire toward the outside thereof to form a turnup portion (14), and at least one rubberized layer extending at least along the turnup portion of the carcass and containing a plurality of reinforcing steel elements (3) obliquely arranged in parallel with each other with respect to the cord direction of the carcass ply as a bead portion reinforcing layer (13), characterized in that at least a greater part of said reinforcing steel elements (3) included in each bead portion reinforcing layer (13) are divided into a plurality of groups (4,4') each comprised of a plurality of reinforcing steel elements, and a distance (δ,δ') between the groups or between the group and the reinforcing steel element adjacent to this group is wider than the distance between the adjoining reinforcing steel elements in the group.

6. A tire as claimed in claim 5, characterized in that the number of the reinforcing steel elements is the same in the groups.

7. A tire as claimed in claim 5, characterized in that the number of the reinforcing steel elements is different in the groups.

8. A tire as claimed in any of claims 5 to 7, characterized in that at least a part of the reinforcing steel elements included in the group comes into contact with each other without restraint.

9. A tire as claimed in any of claims 5 to 8, characterized by further comprising a belt (2) comprised of a plurality of belt layers each composed of a rubberized layer containing reinforcing steel elements.

10. A tire as claimed in claim 9, characterized in that said reinforcing steel elements (3) are the same as used in said bead portion reinforcing layer (13).

## Patentansprüche

1. Radialer Luftreifen (1), der einen Gürtel (2) hat, der aus einer Vielzahl von Gürtelschichten besteht, von denen jede eine gummigetränkte Schicht umfaßt, die Verstärkungs-Stahlelemente (3) enthält, die parallel zueinander und schräg zu der Äquatorebene des Reifens als Verstärkung für einen Laufflächenbereich des Reifens angeordnet sind, dadurch gekennzeichnet, daß mindestens ein größerer Teil der in jede gummigetränkte Gürtelschicht eingebetteten Verstärkungs-Stahlelemente (3) in eine Vielzahl von Gruppen (4,4') unterteilt ist, von denen jede aus einer Vielzahl von Verstärkungs-Stahlelementen besteht, und der Abstand (δ, δ') zwischen den Gruppen oder zwischen der Gruppe und dem benachbarten Verstärkungs-Stahlelement größer ist als der Abstand zwischen den benachbarten Verstärkungs-Stahlelementen in der Gruppe.

2. Reifen gemäß Anspruch 1, dadurch gekennzeichnet, daß die Anzahl der Verstärkungs-Stahlelemente in den Gruppen gleich ist.

3. Reifen gemäß Anspruch 1, dadurch gekennzeichnet, daß die Anzahl der Verstärkungs-Stahlelemente in den Gruppen verschieden ist.

4. Reifen gemäß irgendeinem der Ansprüche 1 bis 3, dadurch gekennzeichnet, daß mindestens ein Teil der in der Gruppe enthaltenen Verstärkungs-Stahlelemente ohne Beschränkung miteinander in Berührung kommt.

5. Radialer Luftreifen (1), der eine Karkasse hat, die aus mindestens einer gummigetränkten Cordfadenlage (11) besteht, die radial angeordnete Cordfäden enthält, und von der inneren nach der äußeren Seite des Reifens um einen Wulstkern (12) herumgelegt ist, um einen Umstülpbereich (14) zu bilden, und aus mindestens einer gummigetränkten Schicht besteht, die sich mindestens längs des Umstülpbereichs der Karkasse erstreckt und eine Vielzahl von Verstärkungs-Stahlelementen (3) enthält, die parallel zueinander und schräg zu der Cordfaden-Richtung der Karkassenlage als eine Wulstbereich-Verstärkungsschicht (13) angeordnet sind, dadurch gekennzeichnet, daß mindestens ein größerer Teil der in jede Wulstbereich-Verstärkungsschicht (13) eingebetteten Verstärkungs-Stahlelemente (3) in eine Vielzahl von Gruppen (4,4') unterteilt ist, vor denen jede aus einer Vielzahl von Verstärkungs-Stahlelementen besteht, und der Abstand (δ, δ') zwischen den Gruppen oder zwischen der Gruppe und dem benachbarten Verstärkungs-Stahlelement größer ist als der Abstand zwischen den benachbarten Verstärkungs-Stahlelementen in der Gruppe.

6. Reifen gemäß Anspruch 5, dadurch gekennzeichnet, daß die Anzahl der Verstärkungs-Stahlelemente in den Gruppen gleich ist.

7. Reifen gemäß Anspruch 5, dadurch gekennzeichnet, daß die Anzahl der Verstärkungs-Stahlelemente in den Gruppen verschieden ist.

8. Reifen gemäß irgendeinem der Ansprüche 5 bis 7, dadurch gekennzeichnet, daß mindestens ein Teil der in der Gruppe enthaltenen Verstärkungs-Stahlelemente ohne Beschränkung miteinander in Berührung kommt.

9. Reifen gemäß irgendeinem der Ansprüche 5 bis 8, dadurch gekennzeichnet, daß er weiterhin einen Gürtel (2) aufweist, der aus einer Vielzahl von Gürtelschichten besteht, von denen jede eine gummigetränkte Schicht umfaßt, die Verstärkungs-Stahlelemente enthält.

10. Reifen gemäß Anspruch 9, dadurch gekennzeichnet, daß die Verstärkungs-Stahlelemente (3) die gleichen sind wie diejenigen, die in der Wulstbereich-Verstärkungsschicht (13) verwendet werden.

## Revendications

1. Bandage pneumatique radial (1) possédant une ceinture (2) comprenant plusieurs couches de ceinture composées chacune d'une couche enrobée de caoutchouc contenant des éléments de renforcement en acier (3) arrangés en oblique, parallèlement l'un à l'autre, par rapport au plan équatorial du bandage pneumatique, à titre de renforcement pour la bande de roulement du bandage pneumatique, caractérisé en ce qu'au moins une partie majeure desdits éléments de renforcement en acier (3) inclus dans chaque couche de ceinture enrobée de caoutchouc est subdivisée en plusieurs groupes (4, 4') comprenant chacun plusieurs éléments de renforcement en acier, et la distance (δ, δ') entre le ou les groupes et l'élément de renforcement en acier adjacent à ce groupe est plus large que la distance entre les éléments de renforcement en acier adjacents dans le groupe.

2. Bandage pneumatique selon la revendication 1, caractérisé en ce que le nombre d'éléments de renforcement en acier est le même dans les groupes.

3. Bandage pneumatique selon la revendication 1, caractérisé en ce que le nombre des éléments de renforcement en acier est différent dans les groupes.

4. Bandage pneumatique selon les revendications 1 à 3, caractérisé en ce qu'au moins une partie des éléments de renforcement en acier inclus dans le groupe viennent se mettre en contact mutuel sans restriction.

5. Bandage pneumatique radial (1) possédant une carcasse comprenant au moins une nappe de câblés (11) enrobés de caoutchouc, dans laquelle sont contenus des câblés arrangés en direction radiale et qui sont enroulés autour d'une tringle de talon (12) depuis le côté interne du bandage pneumatique en direction de son côté externe pour former une portion de retournement vers le haut (14), et au moins une couche enrobée de caoutchouc s'étendant au moins le long de la portion de la carcasse de retournement vers le haut et contenant plusieurs éléments de renforcement en acier (3) arrangés en oblique, parallèlement l'un à l'autre, par rapport à la direction des câblés de la nappe de carcasse à titre de couche de renforcement (13) de la portion de talon, caractérisé en ce qu'au moins une partie majeure desdits éléments de renforcement en acier (3) inclus dans chaque couche de renforcement (13) de la portion de talon est subdivisée en plusieurs groupes (4, 4') comprenant chacun plusieurs éléments de renforcement en acier, et la distance (δ, δ') entre le ou les groupes et l''élément de renforcement en acier adjacent à ce groupe est plus large que la distance entre les éléments ce renforcement en acier adjacents dans le groupe.

6. Bandage pneumatique selon la revendication 5, caractérisé en ce que le nombre des éléments de renforcement en acier est le même dans les groupes.

7. Bandage pneumatique selon la revendication 5, caractérisé en ce que le nombre des éléments de renforcement en acier est différent dans les groupes.

8. Bandage pneumatique selon l'une quelconque des revendications 5 à 7, caractérisé en ce qu'au moins une partie des éléments de renforcement en acier inclus dans le groupe viennent se mettre en contact mutuel sans restriction.

9. Bandage pneumatique selon l'une quelconque des revendications 5 à 8, caractérisé par le fait qu'il comprend, en outre, une ceinture (2) comprenant plusieurs couches de ceinture composées chacune d'une couche enrobée de caoutchouc contenant des éléments de renforcement en acier.

10. Bandage pneumatique selon la revendication 9, caractérisé en ce que lesdits éléments de renforcement en acier (3) sont les mêmes que ceux utilisés dans ladite couche de renforcement (13) de la portion de talon.
